# FASCICULE DE BREVET EUROPEEN

(11) **EP 2 512 301 B1**
(45) Date de publication et mention de la délivrance du brevet: **28.08.2013**
(21) Numéro de dépôt: 10809024.2
(22) Date de dépôt: 15.12.2010
(51) Int. Cl.: A47J 27/00, A47J 36/02, C23C 8/58

(54) **PROCEDE D'OBTENTION D'UN RECIPIENT DE CUISSON AVEC FOND DIFFUSEUR ET ARTICLE CULINAIRE OU APPAREIL ELECTRIQUE DE CUISSON COMPORTANT UN TEL RECIPIENT DE CUISSON**
VERFAHREN ZUR HERSTELLUNG EINES KOCHGEFÄSSES MIT WÄRMEDIFFUSIONSBODEN UND KÜCHENARTIKEL ODER ELEKTRISCHES KOCHGERÄT MIT EINEM DERARTIGEN KOCHGEFÄSS
METHOD OF OBTAINING A COOKING VESSEL WITH A HEAT-DIFFUSING BOTTOM AND CULINARY ARTICLE OR ELECTRICAL COOKING APPARATUS COMPRISING SUCH A COOKING VESSEL

(30) Priorité: 18.12.2009 FR 0906145
(43) Date de publication de la demande: 24.10.2012
(73) Titulaire: SEB S.A., 69130 Ecully (FR)
(72) Inventeur: TUFFE, Stéphane, F-73160 Cognin (FR); ALLEMAND, Simon, F-74150 Rumilly (FR)
(74) Mandataire: Cémeli, Eric Philippe Laurent
(86) Numéro de dépôt international: PCT/FR2010/052743
(87) Numéro de publication internationale: WO 2011/073577

(56) Documents cités:
- DE-A1- 4 305 375
- DE-U1- 9 111 901
- US-A1- 2008 118 763

## Description

La présente invention concerne le domaine technique des appareils et ustensiles de cuisson comportant un récipient de cuisson.

La présente invention concerne plus particulièrement, mais non exclusivement, les articles culinaires tels que les casseroles, les poêles ou les woks, ainsi que les appareils électriques de cuisson comportant une cuve destinée à contenir les aliments.

Il est connu de réaliser des récipients de cuisson en acier nitruré. Les documents CN1042469 et US 2008/118763 divulguent des articles culinaires utilisant un acier au carbone ordinaire, traité de manière à obtenir une couche de nitrure en surface. Un tel article culinaire présente une bonne résistance à la corrosion. De plus cette réalisation s'avère plus économique qu'une réalisation utilisant un acier inoxydable.

Lorsqu'un article culinaire est utilisé avec un chauffage au gaz, la chauffe intervient sur une couronne entourant la partie centrale du fond de l'article culinaire. Cette partie centrale du fond de l'article culinaire reste plus froide. Des essais avec un récipient de cuisson de 1,5 mm d'épaisseur ont montré que la différence de température peut atteindre 80°C entre la zone de chauffe et la partie centrale du fond, lorsque la température de la zone de chauffe atteint 250°C. Ainsi la distribution de température du fond d'un article culinaire réalisé en acier nitruré est inhomogène et conduit à des points chauds lors des cuissons. L'obtention d'une température suffisamment élevée en partie centrale du fond, notamment lors de cuissons au wok, conduit à des températures très élevées au niveau de la zone de chauffe, favorisant la formation de fumées.

Lorsqu'un article culinaire est utilisé avec une plaque de chauffe électrique, une mauvaise planéité du fond de l'article culinaire peut également conduire à la formation de points chauds. La mauvaise planéité du fond contribue à dégrader le transfert thermique entre la plaque de chauffe et le fond de l'article culinaire, augmentant ainsi les temps de cuisson.

Un but de la présente invention est de proposer un procédé de réalisation d'un récipient de cuisson présentant une réalisation économique, une tenue à la corrosion satisfaisante ainsi qu'une répartition de la chaleur améliorée sur le fond.

Un autre but de la présente invention est de proposer un récipient de cuisson présentant une réalisation économique, une tenue à la corrosion satisfaisante ainsi qu'une répartition de la chaleur améliorée sur le fond.

Un autre but de la présente invention est de proposer un article culinaire comportant un récipient de cuisson qui présente une réalisation économique, une tenue à la corrosion satisfaisante ainsi qu'une répartition de la chaleur améliorée sur le fond du récipient de cuisson.

Un autre but de la présente invention est de proposer un appareil électrique de cuisson comportant un récipient de cuisson qui présente une réalisation économique, une tenue à la corrosion satisfaisante ainsi qu'une répartition de la chaleur améliorée sur le fond du récipient de cuisson.

Ces buts sont atteints avec un procédé d'obtention d'un récipient de cuisson comportant les étapes suivantes :
- réalisation d'une cuve par emboutissage d'un substrat en acier ordinaire, la cuve ainsi obtenue présentant un fond et une paroi latérale,
- réalisation sur la cuve d'un traitement de nitrocarburation et d'un traitement d'oxydation, formant sur le substrat une couche intermédiaire nitrurée recouverte d'une couche surfacique oxydée,
- réalisation d'un décapage mécanique de la couche surfacique oxydée sur une surface extérieure de la cuve, la surface extérieure comprenant au moins une partie du fond de la cuve,
- assemblage par frappe à chaud d'un élément diffuseur de chaleur en aluminium sur ladite surface extérieure.

Le traitement d'oxydation permet de passiver la couche nitrurée par la formation d'oxyde de fer Fe₃O₄, ce qui apporte une meilleure résistance à la corrosion à l'ensemble de la surface de la cuve. Le décapage mécanique permet de retirer la couche superficielle oxydée dans la zone de fixation de l'élément diffuseur de chaleur et d'obtenir une rugosité de surface adaptée à un bon accrochage de la matière de l'élément diffuseur de chaleur lors de l'opération de frappe à chaud. Par comparaison avec un brasage, l'assemblage par frappe à chaud d'un élément diffuseur de chaleur en aluminium peut être réalisé avec un temps de cycle plus court, à des températures plus basses limitant la dégradation de l'aspect noir oxydé de la cuve.

Selon un mode de réalisation préféré, le traitement de nitrocarburation est réalisé en bain de sels. Ce type de traitement permet une vitesse de nitruration plus importante qu'avec d'autres procédés. Ainsi pour une épaisseur de cuve donnée, le temps de traitement de nitrocarburation est moins long avec un traitement en bain de sels qu'avec d'autres procédés. En alternative, le traitement de nitrocarburation pourrait notamment être réalisé soit par nitrocarburation gazeuse (par exemple sous atmosphère d'ammoniaque, d'azote, ou d'un ou plusieurs gaz carburants), soit par nitruration ionique (la dissociation d'un mélange de gaz permettant au carbone et à l'azote de diffuser étant obtenue par décharge électrique luminescente).

Selon un mode de réalisation préféré, le traitement d'oxydation est réalisé en bain de sels. Ce type de traitement permet une vitesse d'oxydation plus importante qu'avec d'autres procédés. En alternative, le traitement d'oxydation pourrait notamment être réalisé par voie gazeuse sous atmosphère oxydante.

Avantageusement, entre le traitement d'oxydation et le décapage mécanique, ledit procédé comporte un polissage suivi d'un traitement de post-oxydation. L'incorporation d'une phase de polissage suivie d'une deuxième phase d'oxydation permet d'améliorer notablement les performances de résistance à la corrosion et à l'usure. Le traitement de nitrocarburation en bains de sels contribue à augmenter la rugosité et cette augmentation de la rugosité est défavorable à la résistance à la corrosion. Le polissage permet de réduire la rugosité et d'obtenir une meilleure résistance à la corrosion. Le polissage joue également un rôle important sur l'aspect final de la pièce.

Alors, selon un mode de réalisation préféré, le traitement de post-oxydation est réalisé en bain de sels. En alternative, le traitement de post-oxydation pourrait être réalisé par voie gazeuse sous atmosphère oxydante.

Selon un mode de réalisation avantageux, le décapage mécanique comporte une projection de particules présentant une dureté supérieure à la dureté de l'acier nitruré.

Avantageusement, après l'assemblage par frappe à chaud de l'élément diffuseur de chaleur, ledit procédé comporte une étape de réalisation d'un revêtement sur au moins une partie d'une surface intérieure de la cuve. L'ajout d'un revêtement peut permettre d'obtenir une surface avec de meilleures propriétés de facilité de nettoyage et d'anti-adhésivité.

Ces buts sont atteints aussi avec un récipient de cuisson obtenu selon un procédé conforme à l'une au moins des caractéristiques précitées.

Ces buts sont atteints aussi avec un récipient de cuisson comportant une cuve réalisée en acier nitruré, la cuve présentant une couche surfacique oxydée recouvrant une couche intermédiaire nitrurée, la cuve présentant un fond et une paroi latérale, caractérisé en ce qu'il comporte un élément diffuseur de chaleur en aluminium assemblé par frappe à chaud sur une surface extérieure de la cuve dépourvue de couche surfacique oxydée, ladite surface extérieure comprenant au moins une partie du fond de la cuve.

Avantageusement alors, l'élément diffuseur de chaleur couvre le fond de la cuve. En alternative, l'élément diffuseur de chaleur peut couvrir une partie du fond de la cuve.

Avantageusement encore, l'élément diffuseur de chaleur couvre au moins une partie de la paroi latérale de la cuve. Pour éviter les points chauds, la partie du récipient de cuisson en contact direct avec l'élément chauffant doit être constituée d'un matériau avec une conductivité thermique élevée. Cette disposition permet notamment d'améliorer le transfert thermique lors d'un chauffage au gaz.

Avantageusement encore, l'épaisseur de l'élément diffuseur de chaleur est supérieure à l'épaisseur de la cuve. Une épaisseur minimale du matériau possédant une conductivité thermique élevée est nécessaire pour obtenir une bonne diffusion de la chaleur.

Avantageusement encore, pour permettre un chauffage par induction, une plaque métallique ferritique est encastrée dans l'élément diffuseur de chaleur.

Avantageusement encore, un insert en matériau ferromagnétique est encastré dans l'élément diffuseur de chaleur. Cette disposition permet aussi d'obtenir un chauffage par induction du récipient de cuisson.

Ces buts sont atteints aussi avec un article culinaire comportant un récipient de cuisson et un organe de préhension fixé par au moins un rivet sur ledit récipient de cuisson, ledit récipient de cuisson étant conforme à l'une au moins des caractéristiques précitées.

Ces buts sont atteints aussi avec un appareil électrique de cuisson, comportant un récipient de cuisson associé à des moyens de chauffe, ledit récipient de cuisson étant conforme à l'une au moins des caractéristiques précitées.

Selon un mode de réalisation, l'élément diffuseur de chaleur repose de manière amovible sur les moyens de chauffe.

Selon un autre mode de réalisation, les moyens de chauffe sont solidaires de l'élément diffuseur de chaleur.

L'invention sera mieux comprise à l'étude d'exemples de réalisation, pris à titre nullement limitatif, illustrés dans les figures annexées, dans lesquelles :
- la figure 1 illustre un récipient de cuisson 1 selon l'invention,
- la figure 2 illustre une partie du récipient de cuisson 1 représenté sur la figure 1,
- la figure 3 est une vue partielle en coupe de la cuve 10 du récipient de cuisson après traitement de nitrocarburation,
- la figure 4 est une vue partielle en coupe du récipient de cuisson après assemblage par frappe à chaud de la cuve 10 et d'un élément diffuseur de chaleur 20,
- la figure 5 illustre un article culinaire 100 comportant un récipient de cuisson 1 selon l'invention,
- la figure 6 illustre un appareil électrique de cuisson 200 comportant un récipient de cuisson 1 selon l'invention,
- la figure 7 illustre un appareil électrique de cuisson 200' comportant un récipient de cuisson 1' selon l'invention.

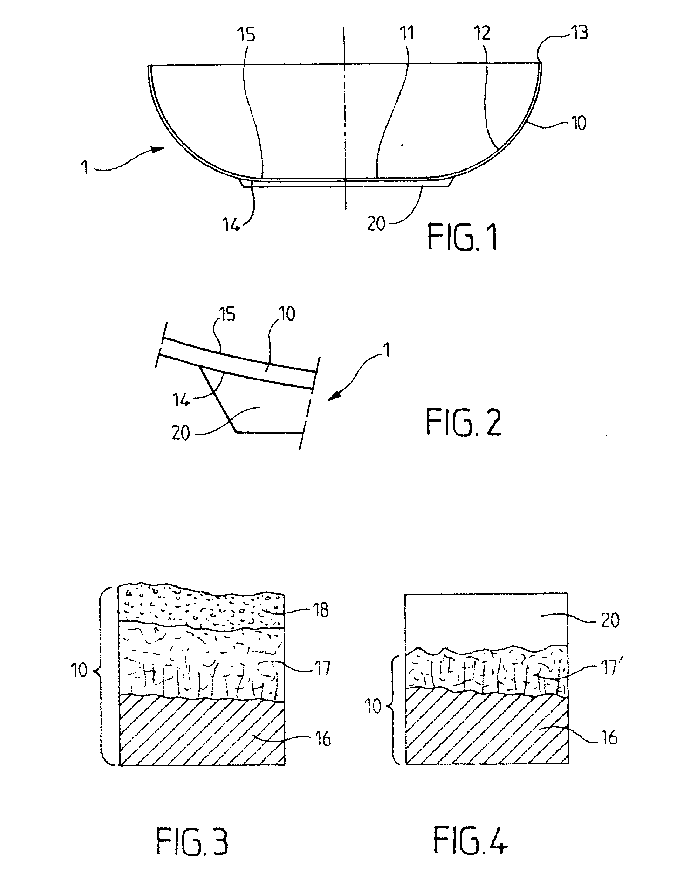

Le récipient de cuisson 1 illustré sur les figures 1 et 2 comporte une cuve 10 et un élément diffuseur de chaleur 20.

La cuve 10 est réalisée en acier nitruré. Le matériau de la cuve 10 est choisi de préférence parmi les aciers présentant de bonnes propriétés d'emboutissage. Notamment, le matériau de la cuve 10 peut être choisi parmi les aciers bas carbone ordinaires, tel que par exemple le DC04. Ces aciers sont toutefois peu résistants à la corrosion en l'absence de traitement de surface. Le matériau de la cuve 10 peut aussi être choisi parmi les aciers alliés comportant une résistance à la corrosion un peu plus élevée, sans pour autant entrer dans la catégorie des aciers inoxydables, tel que par exemple le 15CDV6.

L'élément diffuseur de chaleur 20 est réalisé en aluminium. Un alliage d'aluminium 1050 ou 1200 peut notamment être utilisé comme matériau de l'élément diffuseur de chaleur 20.

La cuve 10 présente un fond 11 et une paroi latérale 12 s'élevant jusqu'à un bord supérieur 13. La cuve 10 peut notamment présenter une forme circulaire, elliptique, ou polygonale. Plus particulièrement, la paroi latérale 12 s'élevant à partir du fond 11 occupe plus de la moitié de la surface de la cuve 10 ; la paroi latérale 12 est incurvée depuis le fond 11 jusqu'au bord supérieur 13. Tel que visible sur les figures 1 et 2, la cuve 10 présente une face extérieure convexe et une face intérieure concave.

L'élément diffuseur de chaleur 20 est disposé du côté de la face extérieure de la cuve 10. L'élément diffuseur de chaleur 20 est de préférence centré par rapport à la cuve 10. Selon l'exemple de réalisation des figures 1 et 2, l'élément diffuseur de chaleur 20 couvre le fond 11 de la cuve 10. L'élément diffuseur de chaleur 20 couvre au moins une partie de la paroi latérale 12 de la cuve 10.

De préférence, l'épaisseur de l'élément diffuseur de chaleur 20 est supérieure à l'épaisseur de la cuve 10. L'épaisseur de la cuve 10 est par exemple comprise entre 0,8 et 2 mm, de préférence entre 1 et 1,5 mm. L'épaisseur de l'élément diffuseur de chaleur est par exemple comprise entre 2,5 et 5 mm, de préférence entre 3,5 et 4 mm.

La cuve 10 peut être obtenue de manière économique par emboutissage d'un substrat 16 découpé dans une tôle d'acier ordinaire. Une telle cuve 10 présente toutefois des propriétés de tenue à la corrosion insatisfaisantes pour un usage culinaire.

La réalisation sur la cuve 10 d'un traitement de nitrocarburation suivi d'un traitement d'oxydation permet d'améliorer les propriétés de tenue à la corrosion de la cuve 10 en favorisant la formation sur le substrat 16 d'une couche intermédiaire nitrurée 17 comportant des nitrures de fer Fe_{2,3}N, recouverte d'une couche surfacique oxydée 18 comportant des oxydes de fer Fe₃O₄. Le traitement d'oxydation permet d'obtenir une coloration noire pour la surface de la cuve 10.

La figure 3 illustre une coupe de la cuve 10 montrant le substrat 16, la couche intermédiaire nitrurée 17 et la couche surfacique oxydée 18. La cuve 10 présente ainsi une couche surfacique oxydée 18 recouvrant une couche intermédiaire nitrurée 17.

Le récipient de cuisson 1 est obtenu selon un procédé comportant les étapes suivantes :
- réalisation d'une cuve 10 par emboutissage d'un substrat 16 en acier ordinaire, la cuve 10 ainsi obtenue présentant un fond 11 et une paroi latérale 12,
- réalisation sur la cuve 10 d'un traitement de nitrocarburation et d'un traitement d'oxydation, formant sur le substrat 16 une couche intermédiaire nitrurée 17 recouverte d'une couche surfacique oxydée 18,
- réalisation d'un décapage mécanique de la couche surfacique oxydée 18 sur une surface extérieure 14 de la cuve 10, la surface extérieure 14 comprenant au moins une partie du fond 11 de la cuve 10,
- assemblage par frappe à chaud d'un élément diffuseur de chaleur 20 en aluminium sur ladite surface extérieure 14.

Le traitement de nitrocarburation du substrat 16 peut notamment être réalisé en bain de sels comportant des cyanates alcalins après un préchauffage à l'air entre 350°C et 400°C. La température du bain de nitrocarburation est par exemple de 580°C. Le traitement d'oxydation peut aussi être réalisé en bain de sels, par exemple être réalisé dans un bain de refroidissement présentant une température comprise entre 350°C et 400°C.

Selon les conditions du traitement de nitrocarburation, une couche de braunite peut apparaître entre le substrat 16 et la couche intermédiaire nitrurée 17.

Le décapage mécanique vise à retirer la couche surfacique oxydée 18 d'une surface extérieure 14 de la cuve 10 avant l'assemblage de l'élément diffuseur de chaleur 20 par frappe à chaud.

Entre le traitement d'oxydation et le décapage mécanique, le procédé comporte avantageusement un polissage suivi d'un traitement de post-oxydation. Le polissage vise à réduire la rugosité obtenue après le traitement d'oxydation. Le traitement de post-oxydation peut être réalisé dans un bain de sels, par exemple dans un bain présentant une température comprise entre 350°C et 400°C. Le traitement de post-oxydation permet d'améliorer encore la résistance à la corrosion.

Selon un procédé avantageux, le décapage mécanique comporte une projection de particules présentant une dureté supérieure à la dureté de l'acier nitruré. Des particules de corindon (alumine alpha) ou de carbure de silicium peuvent notamment être utilisées pour le décapage mécanique de la surface extérieure 14 de la cuve 10. Des essais ont montré qu'une bonne adhésion de l'élément diffuseur de chaleur 20 sur la surface extérieure 14 de la cuve 10 est favorisée lorsque la surface extérieure 14 présente une rugosité arithmétique (Ra) d'un minimum de 5µm.

Après le décapage mécanique, la couche surfacique oxydée 18 a disparu et une partie de la couche intermédiaire nitrurée 17 a également été retirée, l'autre partie de la couche intermédiaire nitrurée 17 devenant une couche nitrurée apparente 17', tel que visible sur la figure 4. L'épaisseur de la couche nitrurée apparente 17' est avantageusement comprise entre 10 et 20 µm.

La surface extérieure 14 ainsi décapée présente des caractéristiques de rugosité et de composition chimique favorable à une bonne adhésion de l'aluminium de l'élément diffuseur de chaleur 20 par frappe à chaud.

Pour l'assemblage par frappe à chaud, l'élément diffuseur de chaleur 20 est positionné sur la surface extérieure 14 de la cuve 10. Pour garantir la bonne géométrie de l'assemblage, la réalisation d'un point soudé entre l'élément diffuseur de chaleur 20 et la cuve 10 peut notamment être envisagée. Un chauffage par induction peut avantageusement être utilisé, la cuve 10 pouvant être chauffée par induction, ce qui contribue à chauffer également l'élément diffuseur de chaleur 20. L'assemblage de l'élément diffuseur de chaleur 20 et de la cuve 10 est ensuite réalisé au moyen d'une presse.

La figure 4 représente l'élément diffuseur de chaleur 20 assemblé par frappe à chaud sur la cuve 10.

Pour valider la tenue de l'assemblage par frappe à chaud de l'élément diffuseur de chaleur 20 et de la cuve 10, des chocs thermiques consistant à réaliser dix cycles de chauffage jusqu'à 400°C suivis par une trempe à l'eau ont été utilisés. Aucun décollement entre l'élément diffuseur de chaleur 20 et la cuve 10 n'a été observé.

La résistance à la corrosion obtenue augmente avec la durée du traitement (nitrocarburation + oxydation + polissage + post-oxydation). Une durée de traitement de 8 heures donne des résultats de résistance à la corrosion satisfaisants. L'épaisseur cumulée de la couche intermédiaire nitrurée 17 et de la couche surfacique oxydée 18 varie de 15µm pour 2 heures de traitement à 30-35µm pour 8 heures de traitement. L'épaisseur de la couche surfacique oxydée 18 est par exemple de 10µm pour 8 heures de traitement. La dureté superficielle dépend principalement de l'acier utilisé pour le substrat 16.

Si désiré, le procédé d'obtention du récipient de cuisson 1 peut comporter une étape de réalisation d'un revêtement sur au moins une partie de la surface intérieure 15 de la cuve 10 après l'assemblage par frappe à chaud de l'élément diffuseur de chaleur 20.

Si désiré, le procédé d'obtention du récipient de cuisson 1 peut notamment comporter une étape d'insertion d'un insert en matériau ferromagnétique dans l'élément diffuseur de chaleur 20, pour réaliser un récipient de cuisson 1 susceptible d'être chauffé par induction, le récipient de cuisson 1 comportant alors l'insert en matériau ferromagnétique encastré dans l'élément diffuseur de chaleur 20. L'insert en matériau ferromagnétique peut par exemple être assemblé avec l'élément diffuseur de chaleur 20 par frappe à chaud. Le matériau ferromagnétique est par exemple un acier ferritique. De préférence, le matériau ferromagnétique est un acier inoxydable ferritique.

Si désiré, le procédé d'obtention du récipient de cuisson 1 peut par exemple notamment comporter une étape d'insertion d'une plaque métallique ferritique compatible avec un chauffage par induction. La plaque métallique ferritique est encastrée dans l'élément diffuseur de chaleur 20.

Avantageusement, la plaque métallique ferritique est réalisée en acier inoxydable.

Avantageusement encore, la plaque métallique ferritique présente des perforations. De préférence, les perforations sont remplies par le matériau de l'élément diffuseur de chaleur 20.

Si désiré la plaque métallique ferritique peut former une coupelle présentant un rebord annulaire couvrant au moins partiellement la périphérie de l'élément diffuseur de chaleur 20.

La plaque métallique ferritique peut notamment être assemblée par frappe à chaud avec l'élément diffuseur de chaleur 20.

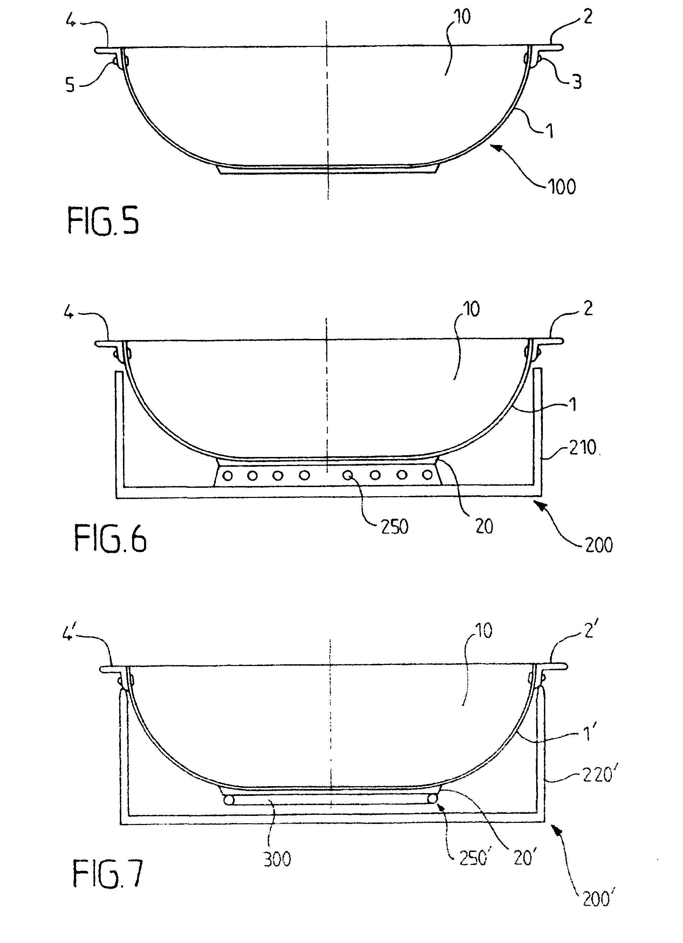

La figure 5 illustre un article culinaire 100 comportant un récipient de cuisson 1 et un organe de préhension 2 fixé par au moins un rivet 3 sur ledit récipient de cuisson 1. A cet effet le rivet 3 est monté dans un trou ménagé dans la cuve 10 du récipient de cuisson 1. Si désiré plusieurs rivets 3 peuvent être utilisés pour fixer l'organe de préhension 2 sur le récipient de cuisson 1. De préférence entre deux et quatre rivets 3 sont utilisés pour fixer l'organe de préhension 2 sur le récipient de cuisson 1. Si désiré un autre organe de préhension 4 peut être fixé par au moins un autre rivet 5 sur ledit récipient de cuisson 1.

L'élément diffuseur de chaleur 20 permet une meilleure répartition de la chaleur sous le récipient de cuisson 1, notamment lors d'une chauffe au gaz. Ainsi lors d'une cuisson au wok, une température élevée peut être obtenue à l'intérieur du récipient de cuisson 1 en évitant la formation de points chauds favorisant le dégagement de fumées.

La figure 6 illustre un appareil électrique de cuisson 200, comportant un récipient de cuisson 1 associé à des moyens de chauffe 250. Le récipient de cuisson 1 est agencé sur une base chauffante 210 (représentée schématiquement) comportant les moyens de chauffe 250. L'élément diffuseur de chaleur 20 repose sur les moyens de chauffe 250. Si désiré le récipient de cuisson 1 peut être amovible par rapport à la base chauffante 210. L'élément diffuseur de chaleur 20 repose alors de manière amovible sur les moyens de chauffe 250.

La figure 7 illustre un appareil électrique de cuisson 200' différent de l'exemple de réalisation précédent en ce que les moyens de chauffe 250' sont solidaires de l'élément diffuseur de chaleur 20' du récipient de cuisson 1'. Les moyens de chauffe 250' sont par exemple formés par un élément chauffant blindé 300 assemblé par frappe à chaud sur l'élément diffuseur de chaleur 20', tel que décrit dans le document FR2730120. Le récipient de cuisson 1' est agencé sur un boîtier 220' (représenté schématiquement). Si désiré le récipient de cuisson 1' peut être amovible par rapport au boîtier 220'. Les moyens de chauffe 250' peuvent alors être alimentés directement par un cordon électrique amovible, ou par l'intermédiaire d'un connecteur électrique monté dans le boîtier 220'. Plus particulièrement, tel que représenté sur la figure 7, les poignées 2', 4' du récipient de cuisson 1' reposent sur le boîtier 220'.

Le récipient de cuisson 1;1' selon l'invention comportant l'élément diffuseur de chaleur 20 ; 20' en aluminium assemblé par frappe à chaud sur la surface extérieure 14 de la cuve 10 dépourvue de couche surfacique oxydée 18 permet d'obtenir une répartition de température plus homogène au dessus du fond 11 de la cuve 10 ainsi qu'une bonne cohésion mécanique entre le substrat 16 et l'élément diffuseur de chaleur 20 ; 20'.

A titre de variante, l'élément diffuseur de chaleur 20, 20' pourrait couvrir partiellement le fond 11 de la cuve 10.

A titre de variante, les moyens de chauffe 250' solidaires de l'élément diffuseur de chaleur 20' du récipient de cuisson 1' pourraient notamment être formés par un élément chauffant blindé agencé dans l'élément diffuseur de chaleur 20'.

La présente invention n'est nullement limitée aux exemples de réalisation décrits, mais englobe de nombreuses modifications dans le cadre des revendications.

## Revendications

1. Procédé d'obtention d'un récipient de cuisson (1 ; 1'), comportant les étapes suivantes :
- réalisation d'une cuve (10) par emboutissage d'un substrat (16) en acier ordinaire, la cuve (10) ainsi obtenue présentant un fond (11) et une paroi latérale (12),
- réalisation sur ladite cuve (10) d'un traitement de nitrocarburation et d'un traitement d'oxydation, formant sur le substrat (16) une couche intermédiaire nitrurée (17) recouverte d'une couche surfacique oxydée (18),
- réalisation d'un décapage mécanique de la couche surfacique oxydée (18) sur une surface extérieure (14) de ladite cuve (10), la surface extérieure (14) comprenant au moins une partie du fond (11) de la cuve (10),
- assemblage par frappe à chaud d'un élément diffuseur de chaleur (20) en aluminium sur ladite surface extérieure (14).

2. Procédé selon la revendication 1, **caractérisé en ce que** le traitement de nitrocarburation est réalisé en bain de sels.

3. Procédé selon l'une des revendications 1 ou 2, **caractérisé en ce que** le traitement d'oxydation est réalisé en bain de sels.

4. Procédé selon l'une des revendications 1 à 3, **caractérisé en ce qu'**entre le traitement d'oxydation et le décapage mécanique, ledit procédé comporte un polissage suivi d'un traitement de post-oxydation.

5. Procédé selon la revendication 4, **caractérisé en ce que** le traitement de post-oxydation est réalisé en bain de sels.

6. Procédé selon l'une des revendications 1 à 5, **caractérisé en ce que** le décapage mécanique comporte une projection de particules présentant une dureté supérieure à la dureté de l'acier nitruré.

7. Procédé selon l'une des revendications 1 à 6, **caractérisé en ce qu'**après l'assemblage par frappe à chaud de l'élément diffuseur de chaleur (20 ; 20'), ledit procédé comporte une étape de réalisation d'un revêtement sur au moins une partie d'une surface intérieure (15) de la cuve (10).

8. Récipient de cuisson (1 ; 1') comportant une cuve (10) réalisée en acier nitruré, la cuve (10) présentant une couche surfacique oxydée (18) recouvrant une couche intermédiaire nitrurée (17), la cuve (10) présentant un fond (11) et une paroi latérale (12), **caractérisé en ce qu'**il comporte un élément diffuseur de chaleur (20 ; 20') en aluminium assemblé par frappe à chaud sur une surface extérieure (14) de la cuve (10) dépourvue de couche surfacique oxydée (18), ladite surface extérieure (14) comprenant au moins une partie du fond (11) de la cuve (10).

9. Récipient de cuisson (1 ; 1') selon la revendication 8, **caractérisé en ce que** l'élément diffuseur de chaleur (20 ; 20') couvre le fond (11) de la cuve (10).

10. Récipient de cuisson (1 ; 1') selon l'une des revendications 8 ou 9, **caractérisé en ce que** l'élément diffuseur de chaleur (20 ; 20') couvre au moins une partie de la paroi latérale (12) de la cuve (10).

11. Récipient de cuisson (1) selon l'une des revendications 8 à 10, **caractérisé en ce qu'**une plaque métallique ferritique est encastrée dans l'élément diffuseur de chaleur (20).

12. Récipient de cuisson (1) selon l'une des revendications 8 à 10, **caractérisé en ce qu'**un insert en matériau ferromagnétique est encastré dans l'élément diffuseur de chaleur (20).

13. Article culinaire (100) comportant un récipient de cuisson (1) et un organe de préhension (2) fixé par au moins un rivet (3) sur ledit récipient de cuisson (1), **caractérisé en ce que** ledit récipient de cuisson (1) est conforme à l'une des revendications 8 à 12.

14. Appareil électrique de cuisson (200 ; 200'), comportant un récipient de cuisson (1 ; 1') associé à des moyens de chauffe (250 ; 250'), **caractérisé en ce que** ledit récipient de cuisson (1 ; 1') est conforme à l'une des revendications 8 à 12.

15. Appareil électrique de cuisson selon la revendication 14, **caractérisé en ce que** l'élément diffuseur de chaleur (20) repose de manière amovible sur les moyens de chauffe (250).

16. Appareil électrique de cuisson selon la revendication 14, **caractérisé en ce que** les moyens de chauffe (250') sont solidaires de l'élément diffuseur de chaleur (20').

## Patentansprüche

1. Verfahren zur Herstellung eines Kochgefäßes (1; 1'), umfassend folgende Schritte:
- Ausführen eines Behälters (10) durch Tiefziehen eines Substrates (16) aus gewöhnlichem Stahl, wobei der so hergestellte Behälter (10) einen Boden (11) und eine Seitenwand (12) aufweist,
- Ausführen einer Nitrocarburierungsbehandlung und einer Oxidationsbehandlung am Behälter (10), wobei auf dem Substrat (16) eine nitridhaltige Zwischenschicht (17) gebildet wird, die von einer oxidierten Oberflächenschicht (18) überzogen ist,
- Ausführen einer mechanischen Entzunderung der oxidierten Oberflächenschicht (18) auf einer Außenfläche (14) des Behälters (10), wobei die Außenfläche (14) wenigstens einen Teil des Bodens (11) des Behälters (10) umfasst,
- Anbringen eines Wärmediffusionselementes (20) aus Aluminium auf der Außenfläche (14) mittels Warmaufschlagen.

2. Verfahren nach Anspruch 1, **dadurch gekennzeichnet, dass** die Nitrocarburierungsbehandlung im Salzbad erfolgt.

3. Verfahren nach einem der Ansprüche 1 oder 2, **dadurch gekennzeichnet, dass** die Oxidationsbehandlung im Salzbad erfolgt.

4. Verfahren nach einem der Ansprüche 1 bis 3, **dadurch gekennzeichnet, dass** zwischen der Oxidationsbehandlung und der mechanischen Entzunderung das Verfahren einen Poliervorgang gefolgt von einer Nachoxidationsbehandlung umfasst.

5. Verfahren nach Anspruch 4, **dadurch gekennzeichnet, dass** die Nachoxidationsbehandlung im Salzbad erfolgt.

6. Verfahren nach einem der Ansprüche 1 bis 5, **dadurch gekennzeichnet, dass** die mechanische Entzunderung eine Schleuderstrahlung mit Teilchen umfasst, die eine Härte aufweisen, die höher ist als die Härte des Nitrierstahls.

7. Verfahren nach einem der Ansprüche 1 bis 6, **dadurch gekennzeichnet, dass** nach Anbringen des Wärmediffusionselementes (20; 20') mittels Warmaufschlagen das Verfahren einen Schritt des Ausführens einer Beschichtung auf wenigstens einem Teil einer Innenfläche (15) des Behälters (10) umfasst.

8. Kochgefäß (1; 1'), umfassend einen aus Nitrierstahl hergestellten Behälter (10), wobei der Behälter (10) eine oxidierte Oberflächenschicht (18) aufweist, die eine nitridhaltige Zwischenschicht (17) überzieht, wobei der Behälter (10) einen Boden (11) und eine Seitenwand (12) aufweist, **dadurch gekennzeichnet, dass** es ein Wärmediffusionselement (20; 20') aus Aluminium umfasst, das mittels Warmaufschlagen auf einer Außenfläche (14) des Behälters (10), die keine oxidierte Oberflächenschicht (18) aufweist, angebracht wird, wobei die Außenfläche (14) wenigstens einen Teil des Bodens (11) des Behälters (10) umfasst.

9. Kochgefäß (1; 1') nach Anspruch 8, **dadurch gekennzeichnet, dass** das Wärmediffusionselement (20; 20') den Boden (11) des Behälters (10) bedeckt.

10. Kochgefäß (1; 1') nach einem der Ansprüche 8 oder 9, **dadurch gekennzeichnet, dass** das Wärmediffusionselement (20; 20') wenigstens einen Teil der Seitenwand (12) des Behälters (10) bedeckt.

11. Kochgefäß (1) nach einem der Ansprüche 8 bis 10, **dadurch gekennzeichnet, dass** eine ferritische Metallplatte in das Wärmediffusionselement (20) eingebaut ist.

12. Kochgefäß (1) nach einem der Ansprüche 8 bis 10, **dadurch gekennzeichnet, dass** eine Einlage aus ferromagnetischem Material in das Wärmediffusionselement (20) eingebaut ist.

13. Küchenartikel (100), umfassend ein Kochgefäß (1) und ein Greifelement (2), das mit wenigstens einer Niete (3) am Kochgefäß (1) befestigt ist, **dadurch gekennzeichnet, dass** das Kochgefäß (1) einem der Ansprüche 8 bis 12 entspricht.

14. Elektrisches Kochgerät (200; 200'), umfassend ein Kochgefäß (1; 1'), das mit Heizmitteln (250; 250') verbunden ist, **dadurch gekennzeichnet, dass** das Kochgefäß (1; 1') einem der Ansprüche 8 bis 12 entspricht.

15. Elektrisches Kochgerät nach Anspruch 14, **dadurch gekennzeichnet, dass** das Wärmediffusionselement (20) abnehmbar auf den Heizmitteln (250) aufliegt.

16. Elektrisches Kochgerät nach Anspruch 14, **dadurch gekennzeichnet, dass** die Heizmittel (250') mit dem Wärmediffusionselement (20') fest verbunden sind.

## Claims

1. A method of obtaining a cooking vessel (1; 1'), comprising the following steps:
- a vessel (10) is produced by drawing an ordinary steel substrate (16), the vessel (10) thus obtained having a bottom (11) and a side wall (12)
- a nitrocarburizing treatment and an oxidizing treatment are carried out on said vessel (10), forming on the substrate (16) a nitrided intermediate layer (17) covered with an oxidized surface layer (18)
- the oxidized surface layer (18) is mechanically abraded on an outer surface (14) of said vessel (10), the outer surface (14) comprising at least a portion of the bottom (11) of the vessel (10)
- a heat-diffusing element (20) made of aluminium is assembled by hot stamping on said outer surface (14).

2. A method according to claim 1, **characterised in that** the nitrocarburizing treatment is carried out in a salt bath.

3. A method according to one of claims 1 or 2, **characterised in that** the oxidation treatment is carried out in a salt bath.

4. A method according to one of claims 1 to 3, **characterised in that** between oxidation treatment and mechanical abrasion, said method comprises polishing followed by post-oxidation treatment.

5. A method according to claim 4, **characterised in that** the post-oxidation treatment is carried out in a salt bath.

6. A method according to one of claims 1 to 5, **characterised in that** mechanical abrasion comprises the spraying of particles with a hardness greater than the hardness of the nitrided steel.

7. A method according to one of claims 1 to 6, **characterised in that** after the heat-diffusing element (20 ; 20') is assembled by hot stamping, said method comprises a step of forming a coating on at least a portion of an inner surface (15) of the vessel (10).

8. A cooking vessel (1; 1') comprising a vessel (10) made of nitrided steel, the vessel (10) having an oxidized surface layer (18) covering a nitrided intermediate layer (17), the vessel (10) having a bottom (11) and a side wall (12), **characterised in that** it comprises an aluminium heat-diffusing element (20; 20') assembled by hot stamping on an outer surface (14) of the vessel (10) devoid of the oxidized surface layer (18), said outer surface (14) comprising at least a portion of the bottom (11) of the vessel (10).

9. A cooking vessel (1; 1') according to claim 8, **characterised in that** the heat-diffusing element (20; 20') covers the bottom (11) of the vessel (10).

10. A cooking vessel (1; 1') according to one of claims 8 or 9, **characterised in that** the heat-diffusing element (20; 20') covers at least a portion of the side wall (12) of the vessel (10).

11. A cooking vessel (1) according to one of claims 8 to 10, **characterised in that** a ferritic steel plate is embedded in the heat-diffusing element (20).

12. A cooking vessel (1) according to one of claims 8 to 10, **characterised in that** an insert made of a ferromagnetic material is embedded in the heat-diffusing element (20).

13. A culinary article (100) comprising a cooking vessel (1) and a gripping member (2) attached by at least one rivet (3) on said cooking vessel (1), **characterised in that** said cooking vessel (1) conforms to one of claims 8 to 12.

14. An electrical cooking apparatus (200; 200'), comprising a cooking vessel (1; 1') associated with heating means (250; 250'), **characterised in that** said cooking vessel (1; 1') conforms to one of claims 8 to 12.

15. An electrical cooking apparatus according to claim 14, **characterised in that** the heat-diffusing element (20) rests removably on the heating means (250).

16. An electrical cooking apparatus according to claim 14, **characterised in that** the heating means (250') is integral with the heat-diffusing element (20').
